# EUROPÄISCHE PATENTSCHRIFT

(11) **EP 1 557 614 B1**
(45) Veröffentlichungstag und Bekanntmachung des Hinweises auf die Patenterteilung: **28.05.2008**
(21) Anmeldenummer: 04405038.3
(22) Anmeldetag: 21.01.2004
(51) Int. Cl.: F24D 3/16

(54) **Kontaktelement und Deckenelement**
Contact element and ceiling element
Elément de contact et élément de plafond

(43) Veröffentlichungstag der Anmeldung: 27.07.2005
(73) Patentinhaber: MWH Barcol-Air AG, 8712 Stäfa (CH)
(72) Erfinder: Roschmann, Klaus, 8730 Uznach (CH); Ender, Joseph, 8363 Bichelsee (CH); Schönbächler, Beat, 8841 Gross (CH)
(74) Vertreter: Wagner, Wolfgang Heribert

(56) Entgegenhaltungen:
- EP-A- 0 859 200
- DE-A- 1 946 011
- FR-A- 1 306 680
- FR-E- 86 576
- US-A- 4 635 710

## Beschreibung

### Technisches Gebiet

Die Erfindung betrifft ein Kontaktelement gemäss dem Oberbegriff des Anspruchs 1 und ein Deckenelement, welches ein Kontaktelement umfasst. Deckenelemente dieser Art werden zur Klimatisierung von Räumen eingesetzt. Die Kontaktelemente dienen dabei zur Herstellung eines guten thermischen Kontakts zwischen von Kühl- oder Heizflüssigkeit durchflossenen Rohren und einer Lochplatte des Deckenelements, mit der sie verklebt sind.

### Stand der Technik

Aus der US-4 635 710 A ist ein gattungsgemässes Kontaktelement bekannt, bei dem an die Kontaktfläche beidseits je ein gerundeter Randstreifen stetig anschliesst. Es ist jedoch nicht ersichtlich, dass die Kontaktfläche eine Kleberschicht vorgesehen wäre, schon gar nicht eine von den Randstreifen beabstandete. Ein das Kontaktelement umfassendes Deckenelement weist ausserdem ein Panel mit eingebogenen Randstreifen auf, welches auf das Kontaktelement aufgeschnappt ist, wobei die Randstreifen des elastischen Panels die Ränder des Kontaktelements umgreifen. Zwischen dem Panel und dem Kontaktelement kann dabei ein wärmeleitender Füllstoff, bei dem es sich auch um einen Klebstoff handeln kann, angeordnet sein, der die Kontaktfläche des Kontaktelements und dessen Randstreifen vollständig bedeckt. Das Kontaktelement ist nicht unmittelbar zur Verbindung mit einer Lochplatte geeignet, deren Oberseite auch von der Kontaktfläche freie, von einem Vlies bedeckte Bereiche aufweist, sondern ist lediglich als Träger eines einzelnen aufschnappbaren Panels vorgesehen.

Es sind ausserdem Kontaktelemente bekannt, bei denen die Kontaktfläche eben bis zum Rand der Kontaktplatte durchgeht und ganz oder teilweise eine von einer Kleberschicht bedeckte Klebefläche bildet. Daneben sind (s. z.B. EP-0 769 659 A1) ähnliche Kontaktelemente bekannt, bei denen die Kontaktfläche zur Aufnahme einer Kleberschicht mittige oder am Rand liegende, durch eine Stufe abgesetzte, geringfügig höher als ihr verbleibender Teil angeordnete, aber zu demselben parallele Klebeflächen umfasst. In allen Fällen erstreckt sich die Kontaktfläche jeweils eben bis zum Rand der Kontaktplatte, wo dann rechtwinklig eine senkrechte Seitenfläche der Kontaktplatte anschliesst.

Zur Herstellung eines Deckenelements werden die Kontaktelemente direkt auf die Lochplatte geklebt. Das Vlies wird so ausgeschnitten, dass es die von den Kontaktflächen bedeckten Bereiche der Lochplatte freilässt und dann auf die Deckenplatte aufgelegt und punktuell mit ihr verklebt. Es ist jedoch schwierig, die Kontaktelemente so genau auf der Lochplatte anzuordnen und das Vlies so genau zuzuschneiden, dass es überall genau bis zu den Rändern der Kontaktflächen reicht. Oft bleiben dort schmale Streifen frei, an denen dann Luft durch die Lochplatte zirkuliert. Dies führt jedoch meist rasch zu einer Verschmutzung der Decke in diesem Bereich, was aus ästhetischen Gründen unerwünscht ist.

### Darstellung der Erfindung

Der Erfindung liegt die Aufgabe zu Grunde, ein Kontaktelement anzugeben, welches direkt mit der Lochplatte verklebt werden kann, so dass ein zuverlässiger mechanischer und thermischer Kontakt mit derselben gewährleistet ist, welches aber gleichzeitig gestattet, die Lochplatte derart mit Vlies zu bedecken, dass keine Bereiche frei bleiben und die Abdeckung der Lochplatte an den Rändern der Kontaktfläche jeweils lückenlos ist. Ausserdem soll ein entsprechendes Deckenelement angegeben werden.

Diese Aufgaben werden durch die Merkmale im kennzeichnenenden Teil des Anspruchs 1 bzw. durch die Merkmale des Anspruchs 7 gelöst. Die Erfindung erlaubt es, den nicht von den Kontaktflächen bedeckten Bereich lückenlos abzudecken, ohne dass schwer erfüllbare Anforderungen an die Präzision der Fertigung gestellt werden müssten. Ein weiterer Vorteil der Erfindung liegt darin, dass das Vlies zuverlässig an der Lochplatte fixiert ist.

### Kurze Beschreibung der Zeichnungen

Im folgenden wird die Erfindung anhand einer Figur, welche lediglich ein Ausführungsbeispiel darstellt, näher erläutert.

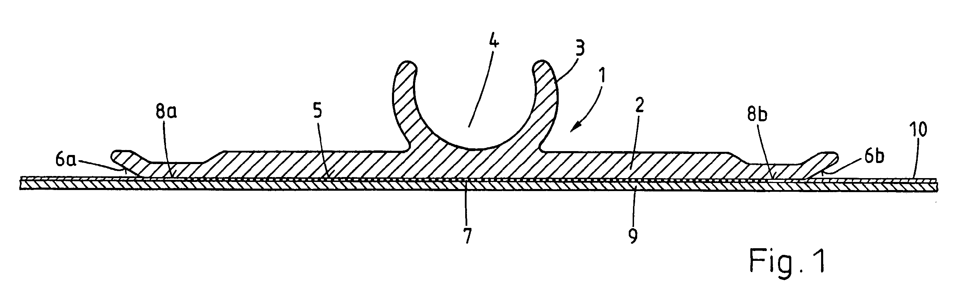

- Fig. 1: zeigt einen Querschnitt durch einen Teil eines erfindungsgemässen Deckenelements.

### Wege zur Ausführung der Erfindung

Das erfindungsgemässe Kontaktelement 1 ist als längliche Kontaktschiene gleichbleibenden Querschnitts ausgebildet und besteht vorzugsweise aus Aluminium. Es umfasst eine rechteckige Kontaktplatte 2, welche an einer Oberseite eine mittig angeordnete Führung 3 trägt, welche einen Kanal 4 zur Aufnahme eines Kühl- oder Heizflüssigkeit führenden Rohres bildet. An der Unterseite bildet die Kontaktplatte eine ebene Kontaktfläche 5. An beiden Längsrändern schliessen an die Kontaktfläche 5 über eine gerundete Kante mit einem Radius von z.B. 0,5mm stufenlos ebene Randstreifen 6a,b an, welche mit der Kontaktfläche 5 einen Winkel von 150° einschliessen und am Rand der Kontaktplatte 2 mindestens 0,5mm, vorzugsweise mindestens 1mm über der Ebene der Kontaktfläche 5 liegen. Winkel zwischen 120° und 160° sind gut geeignet. Die Randstreifen könnten auch gekrümmt, z.B. leicht konvex sein, mit glattem Uebergang zur Kontaktfläche. Vorzugsweise steigen sie bis zum Rand der Kontaktplatte nach aussen stetig an und bilden keine nach aussen weisenden Stufen.

Die Kontaktfläche 5 zerfällt in eine den grössten Teil derselben einnehmende Klebefläche, welche von einer Kleberschicht 7 bedeckt ist und von der Kleberschicht 7 freie Grenzstreifen 8a,b, welche sich vom Rand der Klebefläche bis zum Rand der Kontaktfläche 5 erstrecken, wo die Randstreifen 6a,b anschliessen. Die Kleberschicht 7 verbindet das Kontaktelement 1 mit einer Lochplatte 9. Ihre Dicke beträgt zwischen 0,18mm und 0,2mm. Die Klebefläche kann auch gegenüber ihrer Umgebung geringfügig höher liegen, d.h. den Grund einer flachen Vertiefung in der Kontaktfläche bilden.

Die Lochplatte 9 trägt mehrere parallel mit Abstand nebeneinander angeordnete Kontaktelemente 1. Der nicht von den Kontaktflächen 5 derselben bedeckte Bereich ist von einem Vlies 10, einem etwa 0,2mm dicken Akustikvlies mit lärmdämpfender Wirkung, bedeckt. Das Vlies 10 reicht beidseits der Kontaktplatte 2 mindestens bis zum äusseren Rand der Grenzstreifen 8a,b, doch ist es von Vorteil, wenn es bis unter die Grenzstreifen 8a,b und möglichst bis in die Nähe der Kleberschicht 7 gezogen ist. Das Vlies 10 ist vorzugsweise geringfügig dicker als die Kleberschicht 7 und daher unter den Grenzstreifen 8a,b leicht geklemmt und damit zuverlässig festgehalten. Es kann bis zum Rand der Kleberschicht 7 reichen, doch ist dies nicht erforderlich. Die Lage des Randes des Vlieses 10 kann um die Breite des Grenzstreifens 8a;b schwanken, ohne dass ein störender unbedeckter Streifen an der Oberseite der Lochplatte 9 entstünde.

Zur Herstellung des erfindungsgemässen Deckenelements werden die Kontaktelemente 1 zuerst mit einer ca. 0,25mm dicken Kleberschicht versehen und dann gegen die Oberseite der Lochplatte 9 gepresst, wobei die Kleberschicht auf die besagte Dicke von 0,18mm bis 0,2mm komprimiert wird und, sich seitlich geringfügig ausdehnend, die Klebefläche bedeckt. Das Vlies 10 kann entweder in Streifen vorliegen, die zwischen die Kontaktelemente passen oder einstückig, mit ausgeschnittenen streifenförmigen Oeffnungen, deren Breite jeweils geringfügig grösser ist als die der Klebfläche, mit an die die Querränder der Oeffnungen anschliessenden Schnitten.

Das Vlies wird aufgelegt, wobei es zwischen den Kontaktelementen 1 etwas aufgewölbt ist und die die Oeffnungen begrenzenden Ränder an den Rändern der Kontaktplatten 2 anstehen. Dann werden die an die Oeffnungen anschliessenden Randbereiche des Vlieses durch Druck auf dasselbe von oben und streichende Bewegungen gegen die Kontaktplatte 2 unter die Randstreifen 6a;b gedrückt, von denen sie im weiteren unter die Kontaktfläche 5 geführt werden, bis das Vlies 10 zwischen den Kontaktelementen 1 flach auf der Lochplatte 9 liegt, mit den Rändern der Oeffnungen unter den Grenzstreifen 8a;b. Die Randstreifen 6a,b erlauben dabei jeweils ein problemloses Einschieben der die Oeffnung begrenzenden Ränder des Vlieses unter die Kontaktfläche 5.

### Bezugszeichenliste

- 1: Kontaktelement
- 2: Kontaktplatte
- 3: Führung
- 4: Kanal
- 5: Kontaktfläche
- 6a,b: Randstreifen
- 7: Kleberschicht
- 8a,b: Grenzstreifen
- 9: Lochplatte
- 10: Vlies

## Patentansprüche

1. Kontaktelement mit einer Kontaktplatte (2), welche an einer Unterseite eine ebene Kontaktfläche (5) aufweist, an welche an einander gegenüberliegenden Rändern jeweils nach aussen ansteigende Randstreifen (6a, 6b) stufenlos anschliessen und mit mindestens einer an der Oberseite der Kontaktplatte (2) angeordneten, sich im wesentlichen über ihre Länge erstreckenden Führung (3) für ein Rohr, **dadurch gekennzeichnet, dass** die Kontaktfläche (5) eine Kleberschicht (7) trägt, welche von den Randstreifen (6a, 6b) beabstandet ist.

2. Kontaktelement nach Anspruch 1, **dadurch gekennzeichnet, dass** die Kleberschicht (7) annähernd die ganze Kontaktfläche (5) bedeckt, wobei an die Randstreifen (6a, 6b) anschliessende Grenzstreifen (8a, 8b) derselben frei bleiben.

3. Kontaktelement nach Anspruch 1 oder 2, **dadurch gekennzeichnet, dass** die Randstreifen (6a, 6b) sich jeweils stufenlos bis zu einem Aussenrand der Kontaktplatte (2) erstrecken und dort, vorzugsweise um mindestens 0,5mm, über der Ebene der Kontaktfläche (5) liegen.

4. Kontaktelement nach einem der Ansprüche 1 bis 3, **dadurch gekennzeichnet, dass** die Randstreifen (6a, 6b) eben sind und mit der Kontaktfläche (5) einen stumpfen Winkel, der vorzugsweise zwischen 120° und 160° liegt, einschliessen.

5. Kontaktelement nach einem der Ansprüche 1 bis 4, **dadurch gekennzeichnet, dass** die Kontaktfläche (5) rechteckig ist und die Randstreifen (6a, 6b) an ihre Längsränder anschliessen.

6. Kontaktelement nach Anspruch 5, **dadurch gekennzeichnet, dass** sein Querschnitt über seine Länge im wesentlichen konstant ist.

7. Deckenelement mit mindestens einem Kontaktelement (1) nach einem der Ansprüche 1 bis 6 sowie mit einer Lochplatte (9), mit deren Oberseite eine Klebefläche des mindestens einen Kontaktelements (1), welche sich über einen Teil der Kontaktfläche (5), der an die Randstreifen (6a, 6b) anschliessende Grenzstreifen (8a, 8b) frei lässt, erstreckt, mittels der Kleberschicht (7) verklebt ist sowie mit einem Vlies (10), welches vom mindestens einen Kontaktelement (1) freie Bereiche der Oberseite der Lochplatte (9) bedeckt, wobei die Klebefläche ausgespart ist, das Vlies (10) jedoch überall mindestens bis zum Rand der Kontaktfläche (5) und vorzugsweise in die Grenzstreifen (8a, 8b) hinein reicht.

8. Deckenelement nach Anspruch 7, **dadurch gekennzeichnet, dass** die Dicke des Vlieses (10) geringfügig grösser ist als die der Kleberschicht (7), so dass unter den Grenzstreifen (8a, 8b) liegende Teile desselben leicht geklemmt sind.

9. Deckenelement nach Anspruch 7 oder 8, **dadurch gekennzeichnet, dass** das Vlies (10) die nicht von der Kontaktfläche (5) des mindestens einen Kontaktelements (1) bedeckten Teile der Oberseite der Lochplatte (9) lückenlos bedeckt.

## Claims

1. Contact element comprising a contact plate (2) which has on an underside a planar contact surface (5) with which, on mutually opposing edges, edge strips (6a, 6b) which in each case rise outward steplessly merge and comprising at least one guide (3) for a tube, which guide is arranged on the upper side of the contact plate (2) and extends substantially over the length thereof, **characterized in that** the contact surface (5) carries an adhesive layer (7) which is set apart from the edge strips (6a, 6b).

2. Contact element according to claim 1, **characterized in that** the adhesive layer (7) covers almost the entire contact surface (5), boundary strips (8a, 8b) which merge with the edge strips (6a, 6b) remaining free therefrom.

3. Contact element according to claim 1 or 2, **characterized in that** the edge strips (6a, 6b) extend in each case steplessly up to an outer edge of the contact plate (2) where they are located, preferably by at least 0.5 mm, above the plane of the contact surface (5) .

4. Contact element according to one of claims 1 to 3, **characterized in that** the edge strips (6a, 6b) are planar and enclose with the contact surface (5) an obtuse angle which is preferably between 120° and 160 °.

5. Contact element according to one of claims 1 to 4, **characterized in that** the contact surface (5) is rectangular and the edge strips (6a, 6b) merge at their longitudinal edges.

6. Contact element according to claim 5, **characterized in that** its cross section is substantially constant over the length thereof.

7. Ceiling element comprising at least one contact element (1) according to one of claims 1 to 6 and also comprising a perforated plate (9), with the upper side of which an adhesive surface of the at least one contact element (1), which adhesive surface extends over a part of the contact surface (5) that leaves free boundary strips (8a, 8b) which merge with the edge strips (6a, 6b), is adhered by means of the adhesive layer (7) and also comprising a nonwoven (10) which covers regions of the upper side of the perforated plate (9) that are free from the at least one contact element (1), the adhesive surface being omitted, whereas the nonwoven (10) reaches everywhere at least up to the edge of the contact surface (5) and preferably into the boundary strips (8a, 8b).

8. Ceiling element according to claim 7, **characterized in that** the thickness of the nonwoven (10) is slightly greater than that of the adhesive layer (7), so parts of said nonwoven that are located below the boundary strips (8a, 8b) are lightly clamped.

9. Ceiling element according to claim 7 or 8, **characterized in that** the nonwoven (10) completely covers the parts of the upper side of the perforated plate (9) that are not covered by the contact surface (5) of the at least one contact element (1).

## Revendications

1. Elément de contact comportant une plaque de contact (2) qui présente sur une face inférieure une surface de contact plane (5) à laquelle font suite en continu, sur des bords opposés l'un à l'autre, des bandes de bordure (6a, 6b) s'élevant chacune vers l'extérieur, et au moins un guidage (3) pour un tuyau disposé sur la face supérieure de la plaque de contact (2), s'étendant essentiellement sur la longueur de celle-ci, **caractérisé en ce que** la surface de contact (5) porte une couche de colle (7) qui est espacée des bandes de bordure (6a, 6b).

2. Elément de contact selon la revendication 1, **caractérisé en ce que** la couche de colle (7) recouvre pratiquement toute la surface de contact (5), des bandes limites (8a, 8b) de cette dernière, adjacentes aux bandes de bordure (6a, 6b), restant libres.

3. Elément de contact selon la revendication 1 ou 2, **caractérisé en ce que** les bandes de bordure (6a, 6b) s'étendent chacune en continu jusqu'à un bord extérieur de la plaque de contact (2) et se trouvent à cet endroit de préférence d'au moins 0,5 mm au-dessus du niveau de la surface de contact (5).

4. Elément de contact selon l'une des revendications 1 à **3, caractérisé en ce que** les bandes de bordure (6a, 6b) sont planes et forment avec la surface de contact (5) un angle obtus qui est situé de préférence entre 120° et 160°.

5. Elément de contact selon l'une des revendications 1 à 4, **caractérisé en ce que** la surface de contact (5) est rectangulaire et les bandes de bordure (6a, 6b) font suite à ses bords longitudinaux.

6. Elément de contact selon la revendication 5, **caractérisé en ce que** sa section transversale est essentiellement constante sur sa longueur.

7. Elément de plafond comportant au moins un élément de contact (1) selon l'une des revendications 1 à 6, ainsi qu'une plaque perforée (9) à la face supérieure de laquelle est collée, au moyen de la couche de colle (7), une surface adhésive de l'au moins un élément de contact (1), laquelle s'étend sur une partie de la surface de contact (5) qui laisse libre des bandes limites (8a, 8b) adjacentes aux bandes de bordure (6a, 6b), ainsi qu'un non tissé (10) qui recouvre des zones de la face supérieure de la plaque perforée (9) libres de l'au moins un élément de contact (1), la surface adhésive étant dégagée, mais le non tissé (10) arrivant partout au moins jusqu'au bord de la surface de contact (5) et de préférence jusque dans les bandes limites (8a, 8b).

8. Elément de plafond selon la revendication 7, **caractérisé en ce que** l'épaisseur du non tissé (10) est un peu plus importante que celle de la couche de colle (7) de telle sorte que des parties du non tissé situées sous les bandes limites (8a, 8b) sont légèrement serrées.

9. Elément de plafond selon la revendication 7 ou 8, **caractérisé en ce que** le non tissé (10) recouvre complètement les parties de la face supérieure de la plaque perforée (9) qui ne sont pas couvertes par la surface de contact (5) de l'au moins un élément de contact (1).
